(19) **Europäisches Patentamt / European Patent Office / Office européen des brevets**

(11) **EP 1 833 209 B1**

(12) **EUROPEAN PATENT SPECIFICATION**

(45) Date of publication and mention
of the grant of the patent:
**14.09.2016 Bulletin 2016/37**

(51) Int Cl.:
*H04W 28/18* (2009.01)    *H04W 28/06* (2009.01)

(21) Application number: **07012950.7**

(22) Date of filing: **23.10.2003**

(54) **Transport block size (TBS) signalling enhancement**

Verbesserung der Signalisierung der Transportblockgrösse (TBS)

Amélioration de la signalisation de la taille du block de transport (TBS)

(84) Designated Contracting States:
**AT BE BG CH CY CZ DE DK EE ES FI FR GB GR
HU IE IT LI LU MC NL PT RO SE SI SK TR**

(30) Priority: **24.10.2002 US 420782 P
05.11.2002 US 287810**

(43) Date of publication of application:
**12.09.2007 Bulletin 2007/37**

(60) Divisional application:
**10010235.9 / 2 259 511**

(62) Document number(s) of the earlier application(s) in
accordance with Art. 76 EPC:
**03024480.0 / 1 414 202**

(73) Proprietor: **Qualcomm Incorporated
San Diego, CA 92121-1714 (US)**

(72) Inventor: **Malkamäki, Esa
02130 Espoo (FI)**

(74) Representative: **Carstens, Dirk Wilhelm et al
Wagner & Geyer
Gewürzmühlstraße 5
80538 München (DE)**

(56) References cited:
• **"Ls on Transport Block Size Signalling" 3GPP
TSG RAN WG1 MEETING R1-02-1456, 8
November 2002 (2002-11-08), XP002269914**
• **"3rd Generation Partnership Project; Technical
Specification Group Radio access Network;MAC
protocol specification (Release 5)" 3GPP TS
25.321 V5.2.0, 30 September 2002 (2002-09-30),
pages 1-53, XP002269912**

**Description**

BACKGROUND

Field of the Invention

The invention relates to wireless communications. In particular, the invention relates to transport block size (TBS) signaling in wireless communications.

Background Information

In systems that include mobile devices, packets are generally sent using one of many modulation schemes. All packets sent during a given transfer generally conform to the same transport block size (TBS). The sender of the packets sends information telling the receiver the modulation scheme and transport block size, among other things, before the packets are sent. Therefore, once the packets are sent, the receiver knows the modulation scheme, the number of multicodes, and the transport block size of the packets and, therefore, can correctly decipher and receive the information.

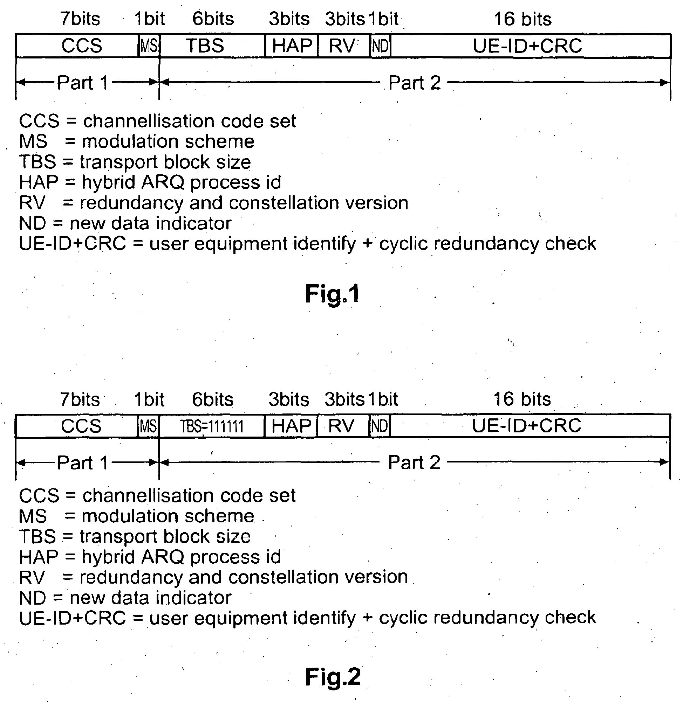

Proposals have been made about increasing the number of bits allocated for the definition of the transport block size (currently 6 bits) to allow for a higher resolution. These proposals have been particularly common with those involved in Third Generation Partnership Project (3GPP) standardization work. Specifically, those individuals working in areas related to Wideband Code Division Multiple Access (WCDMA) and High Speed Downlink Packet Access (HSDPA). In HSDPA, the TBS field is placed, along with other information, in the high-speed shared control channel (HS-SCCH). Fig. 1 shows a diagram of an example allocation of HS-SCCH signaling bits.

In Release 5 of the 3GPP specifications, the TBS is signaled on HS-SCCH using a 6 bit TBS field. The meaning of these bits is tied to the modulation scheme as well as the number of channelisation codes. See 3GPP TS 25.321 v5.2.0 (2002-09), which is hereby incorporated by reference in its entirety, particularly Section 9.2.3 directed to signaling of Transport Block Size.

The transport block size (TBS) has to be the same for the first transmission - and the retransmissions, since the information content has to be the same. The retransmissions can use different redundancy version (RV), i.e., different coding, different number of channelisation codes (small changes currently allowed). The TBS is signalled for each retransmission on the HS-SCCH along with the modulation scheme, channelisation code set, redundancy version and other HARQ parameters.

There is some overlap in the TBS between different modulation schemes and theoretically the modulation scheme can be changed in some special cases, but in practice it is not possible to change the modulation for the retransmissions. This can be a problem if the first transmission is done with 16QAM and, due to bad channel characteristics, QPSK would be better for retransmissions.

The problem has not yet been adequately solved, In one 3GPP proposal, a 7 bit TBS field was proposed for QPSK and a 6 bit TBS field was proposed for 16QAM. See 3GPP Tdoc R1-02-1045.

Another proposal is a mapping of the transport block sizes through a logarithmic conversion to minimize the worst-case relative padding in case the MAC-PDU is not of the exactly same size as the available transport block sizes. This is discussed in document R2-0221668, entitled "Signaling of Transport Block Sizes for HS-DSCH" (Ericsson). However, this approach assumes a fixed number of bits for the signaling of the transport block size, and the transport block sizes are dependent on the modulation and multicode setting. Therefore, In cases where a packet is transferred and an error has occurred and retransmission is requested, the retransmission according to this approach must occur using the same modulation scheme. Thus, a transmitting device (e.g., base station) cannot freely select a modulation scheme whenever a retransmissions is required.

It is also possible that, since the TBS is always the same, there is no need to signal it always with the retransmissions (provided that the UE has received the HS-SCCH correctly for the first transmission) and the TBS could be ignored by the UE for the retransmissions. Thus, the Node B could change the modulation scheme and the number of channelisation codes freely for the retransmission and this type of operation mode could be switched on/off by higher layer signaling. The problem with this proposal is that if the UE does not receive the first transmission correctly, it does not get the TBS at all (since it may be nonsensical in the retransmissions if the Node B has changed the modulation or the number of channelisation codes) and the TB is losl

SUMMARY OF THE INVENTION

According to a first aspect, the present invention provides an apparatus according to the subject-matter of independent claim 1.

Another aspect of the invention is directed to an apparatus according the subject-matter of independent claim 9.

Another aspect of the invention is directed to a method for transport block size signalling, according to the subject-matter of independent claim 17.

Still further aspects of the invention are set forth in the dependent claims, the following description and the drawings.

BRIEF DESCRIPTION OF THE DRAWINGS

The present invention is further described in the detailed description which follows in reference to the noted plurality of drawings by way of non-limiting examples of embodiments of the present invention wherein:

Fig. 1 is a diagram of an example allocation of HS-SCCH signaling bits;
Fig. 2 is a diagram of an allocation of HS-SCCH signaling bits according to a preferred embodiment of the invention;

RETAILED DESCRIPTION

Wireless communications systems are well known in the art. In general, the system consists of at least one base station controller and a plurality of base stations (referred to as "Node B" in the 3GPP specifications) each transmitting information, including signaling information, to a plurality of mobile stations (i.e., User Equipment). The signaling information includes a transport block size, redundancy version, modulation mode, and number of multicodes. Once the mobile device receives this information, the mobile device knows that the modulation scheme and transport block size of any packets that are subsequently transferred. This information may be used to appropriately receive the packets. The mobile device uses the correct modulation scheme and knows how to decode the transport block size based on the modulation scheme. Details of a wireless communications system according to the 3GPP specification are described in the documents listed in Section 2 of 3GPP TD 25.321 v5.2.0 (2002-09).

The preferred embodiments of the invention relate to a method and apparatus for transport block size signaling based on modulation type and multicodes on HS-SCCH (Shared Control Channel for High Speed Downlink Packet Access (HSDPA)). In particular, the embodiments relate to an enhancement to the specifications set forth in Section 9.2.3 of 3GPP TS 25.321 v5.2.0 (2002-09). However, the invention is not limited in its application to the embodiments described in this application and may be applied in several environments, Wideband Code Division Multiple Access (WCDMA),etc.

In the preferred embodiments of the invention, one of the TBS indexes is reserved to indicate an "invalid" TBS. For instance, a TBS consisting of all ones (111111), which conventionally indicates the highest code rate, can be used for this purpose. The TBS field may have a conventional value whenever it is possible to signal it with the conventional method. If the Node B wants to change the modulation scheme or the number of channelisation codes for the retransmission, it is allowed to do that and then the reserved TBS field (e.g., 111111) is used to indicate that the TBS is not valid in this transmission (see Fig. 2) and the TBS of the first transmission should be used. The reserved TBS field can be designated to be any one of the possible values.

If the UE has missed the first transmission (which the Node B typically can notice due to missing ACK/NACK), the Node B can retransmit such that the TBS field is valid and only when the HS-SCCH of the first transmission has been correctly received, change the modulation scheme (if required) and indicate invalid TBS. No higher layer signaling is needed. The one reserved TBS index will tell the UE when the TBS is not valid.

To illustrate the present invention, modulation schemes of quadrature phase shift keying (QPSK) and 16-quadrature amplitude modulation (QAM) will be used in an example. This example allows for the Node B to send for instance the following sequence (first, second, third etc. transmissions of a given transport block):

1. 16QAM, 10 codes with valid TBS index=k (=40) with RV=i
2. QPSK, 10 codes with invalid TBS index =63 (=111111), RV=x
3. QPSK, 8 codes with invalid TBS index=63 (=111111), RV=y
4. 16QAM, 9 codes with valid TBS index= m (=45), RV=z
5. QPSK, 10 codes with invalid TBS index=63 (=111111), RV=w etc.
6. 16QAM, 5 codes with invalid TBS index=63 (=111111), RV=v

That is, every time it is possible to have the valid TBS index, it would be used and if not possible, then TBS index=63 (=111111) would be used.

In the above preferred embodiment, TBS index=k for the first transmission and TBS index =m for the fourth transmission should indicate the same transport block size (different index is necessary because the number of channelisation codes has been changed). The redundancy versions RV can have any allowed values (typically for first transmission RV=0).

In the above example, the first transmission is done with 16QAM and 10 channelisation codes using transport block size of 12488 (corresponds to TBS index =40, see TS 25.321 v.5.2.0 for details), i.e., TBS index = 40 is signaled. The redundancy version can be, e.g., RV-0.

The second transmission is done with QPSK and 10 codes. Since it is not possible to indicate transport block size of 12488 when QPSK and 10 codes are used (the maximum possible TBS that can in this case be indicated is 9377 with TBS index = 62), TBS index = 63 is signalled to indicate that the transport block size of the first transmission (i.e., 12488) should be used instead.

The third transmission is done with QPSK and 8 codes. Again the actual TBS cannot be indicated with TBS index and TBS index = 63 is signaled. The UE uses the actual TBS of 12488 signalled with the first transmission for decoding of the third transmission.

The fourth transmission is done with 16QAM and 9 codes. Although the number of code channels is not the same as for the first transmission, it is possible to signal the actual TBS of 12488 using TBS index = 45.

The fifth transmission is again with QPSK and 10 codes. Again TBS index = 63 has to be signaled.

The sixth transmission is done with 16QAM and 5 codes. Here again TBS index = 63 has to be signalled since it is not possible to indicate the actual TBS.

The transport block size always has to be the same in the retransmission and thus the TBS of the first transmission is always used (not only when the TBS index = 63). The TBS is signaled with every transmission because the mobile station may have lost the first transmission. The preferred embodiments of the invention allows the number of channel bits to be be changed for the retransmission such that the TBS cannot be signaled anymore and in this case the TBS index = 63 should be used. Otherwise, the mobile station can use the TBS signaled with the transmission (if the TBS signaled with the retransmission is different from the TBS signaled with the first transmissions, then there is error somewhere: either signaling information has changed in one of the transmissions or the mobile station is trying to combine two transmission which are not transmission of the same data block.

In a modified embodiment, more bits can be used for TBS signaling in order to have more or total overlap between the TBS of QPSK and 16QAM modulation schemes. The extra bit(s) expands the operation range of the transport block size signalling.

Fog. 2 shows a diagram of allocation of HS-SCCH signaling bits according to an example embodiment of the present invention. According to the present invention, the channelization code set may be represented by seven bits, the modulation scheme represented by one bit, the H-ARQ process number represented by three bits, the new data indicator represented by one bit, and the CRC (cyclic redundancy check) may be represented by 16 bits.

If a base station transfers signaling signifying a modulation mode of 16-QAM, and then transmits packets to a mobile device where one or more of the packets are received in error, the base station may retransmit that particular erroneous packet changing the modulation mode to QPSK. Therefore, according to the present invention, packets originally transmitted using one modulation mode may be retransmitted using a different modulation mode than that used to transmit the original packet. The original packet may be retransmitted for many reasons, such as being received with errors or problems. A base station may decide to change modulation modes for any number of reasons. For example, a particular modulation mode may be less sensitive to transmission errors for a given set of conditions, channel conditions may have changed since the original transmission, the receiver (mobile device) signal power is lower for a specific modulation scheme or set of conditions, etc.

As noted previously, a previous specification for transport block signaling is described in 3GPP TS 25.321 v5.2.0 (2002-09) and various other proposals for transport block size signaling have been made. The methods and apparatus of a preferred embodiment of the present invention are an adaptation or modification of that previously described in the 3GPP specifications. The following is a textual modification of Section 9.23 to conform it to the preferred embodiments of the present Invention. The text below is copied from, or similar to, the text that already exists in the document, modified to conform the document to the preferred embodiments.

Modifications to TS-25.321 Section 9.2.3

Changes to the following text from 3GPP TS 25.321 v5.2.0 are identified by vertical lines in the right hand margin. Additions are indicated by underlining in the text and the deletions are indicated by strikethroughs in the text.

9.2.3 Signalling of Transport Block size for HS-DSCH

For HS-DSCH the transport block size is derived from the TFRI value signalled on the HS-SCCH. The mapping between the TFRI value and the transport block size for each mode is specified below:

9.2.3.1 Transport block size for FDD

For each combination of channelization code set and modulation scheme $i$ = 0..31, a set of $k_i$= 0..62 transport block sizes $L(i. k_l)$ is given by:

If $i$=0 and $k_i < 39$

$$L(i,k_i) = 137 + 12k_i$$

$k_i$ =0,...,38

else

$L(i,k_i)=\lfloor L_{min} p^{k_{0,i}k_i}\rfloor$
$p$=2085/2048
$L_{min}$=296
$k_{0,i}$=from Table 9.2.3.1
$k_i$=0,...,62

end

$k_i$ = 63, i.e., the all ones transport block size index is used to indicate an invalid transport block size and that the transport block size of an earlier transmission should be used instead (this is typically only used for retransmissions). The if statement above is true only for a single channelization code using QPSK modulation. The index $k_i$ of the transport block size $L(i, k_i)$ corresponds to the 6 bit transport block size index signaled on the HS-SCCH. The index $i$ corresponds to the combination of channelization code set and modulation scheme as defined in Table 9.2.3.1.

**Table 9.2.3.1: Values of $k_{0,1}$ for different numbers of channelization codes and modulation schemes**

| Combination $i$ | Modulation scheme | Number of channelization codes | $k_{0,i}$ |
|---|---|---|---|
| 0 | QPSK | 1 | 1 |
| 1 | | 2 | 40 |
| 2 | | 3 | 63 |
| 3 | | 4 | 79 |
| 4 | | 5 | 92 |
| 5 | | 6 | 102 |
| 6 | | 7 | 111 |
| 7 | | 8 | 118 |
| 8 | | 9 | 125 |
| 9 | | 10 | 131 |
| 10 | | 11 | 136 |
| 11 | | 12 | 141 |
| 12 | | 13 | 145 |
| 13 | | 14 | 150 |
| 14 | | 15 | 153 |
| 15 | 16QAM | 1 | 40 |
| 16 | | 2 | 79 |
| 17 | | 3 | 102 |

(continued)

| Combination $i$ | Modulation scheme | Number of channelization codes | $k_{0,i}$ |
|---|---|---|---|
| 18 | | 4 | 119 |
| 19 | | 5 | 131 |
| 20 | | 6 | 141 |
| 21 | | 7 | 150 |
| 22 | | 8 | 157 |
| 23 | | 9 | 164 |
| 24 | | 10 | 169 |
| 25 | | 11 | 175 |
| 26 | | 12 | 180 |
| 27 | | 13 | 184 |
| 28 | | 14 | 188 |
| 29 | | 15 | 192 |

9.2.3.2 Transport block size for 3.84 Mcps TDD

Let $k$ be the signalled TFRI value, then the corresponding liS-DSCH transport block size $L_k$ is given by :

If $k=1..510$

$$L_k = \left\lfloor L_{min} p^k \right\rfloor$$

$$p = \frac{8313}{8192}$$

$$L_{min} = 57$$

If $k = 511$

$$L_k = 102000$$

If $k=0$, $L_k$ indicates NULL and shall not be used to signal a transport block size in the TFRI. Instead $k=0$ shall be used to signal that the transport block size of an carlier transmission of the same transport block should be used instead (this is typically only used for retransmissions).

9.2.3.3 Transport block size for 1.28 Mcps TDD

The mapping of transport block size, in bits, to TFRI value is dependent upon the UE's HS-DSCH capability class. The mapping between TFRI value, i, and the transport block size, $L_i$, is specified by the following:

$$L_0 = NULL \qquad\qquad i = 0,$$

$$L_i = \left\lceil 10^{a+(i-1)(b-a)/62} \right\rceil \qquad i = 1, 2, ...,63$$

where

i = the transport block index,
a = $\log_{10}(TBS_{min})$,
b = $\log_{10}(TBS_{max})$,
and
$TBS_{min}$ = 240,
$TBS_{max}$ = the maximum transport block size that is supported by the UE class, which has the value
7016 for 1.4 Mb/s,
10204 for 2.0 Mbps and
14056 for 2.8 Mb/s.

The NULL value (corresponding to index i = 0) is not signalled to the UE. It can be used by the UE in the Recommended Transport Block Size field of the CQI to signal that no available transport block size could have been used by the Node B to meet the specified target quality for the HS-DSCH. Instead i=0 shall be used to signal to the UE that the transport block size of an earlier transmission of the same transport block should be used instead (this is typically only used for retransmissions).

It is noted that the foregoing examples have been provided merely for the purpose of explanation and are in no way to be construed as limiting of the present invention. While the present invention has been described with reference to a preferred embodiment, it is understood that the words that have been used herein are words of description and illustration, rather than words of limitation. Changes may be made within the purview of the appended claims, as presently stated and as amended, without departing from the scope of the present invention in its aspects. Although the present invention has been described herein with reference to particular methods, materials, and embodiments, the present invention is not intended to be limited to the particulars disclosed herein, rather, the present invention extends to all functionally equivalent structures, methods and uses, such as are within the scope of the appended claims.

**Claims**

1.  An apparatus for use in a base station for transport of block size signaling in a wireless communication system, said apparatus being operable to cause transmission of information to a user equipment by:

    transmitting, prior to transmitting a data packet, information including a first signaling information indicating a transport block size, TBS, the first signaling information being a set number of bits,
    transmitting said data packet by using the transport block size indicated by said first signaling information, and retransmitting, in dependence on the result of the data packet transmission, said data packed using a second signalling information indicating transport block size, the second signalling information being a set number of bits,

    **characterized in that**, if it is riot possible to indicate the transport block size in the retransmission, the second signalling information includes a predefined reserved TBS index value indicating that the transport block size is an invalid TBS for the retransmission, and the transport block size indicated by the first signalling information is used in the retransmission.

2.  The apparatus according to claim 1, wherein the invalid transport block size is indicated by a predefined transport block size index.

3.  The apparatus according to claim 1, wherein the invalid transport block size is indicated by information comprising bits which are all ones or bits which are all zeros.

4.  The apparatus according to any one of the preceding claims, wherein the first signalling information and the second signalling information comprise 6 bits.

5.  The apparatus according to any one of the preceding claims, wherein the modulation scheme is changed for the retransmission.

6.  The apparatus according to any one of the preceding claims, wherein the number of channelisation codes is changed for the retransmission.

7. The apparatus according to any one of the preceding claims, wherein the wireless communication system is a third generation wireless communication system.

8. The apparatus according to any one of the preceding claims, wherein the wireless communication system is implementing High Speed Downlink Packet Access.

9. An apparatus for use in user equipment for transport block size signalling in a wireless communication system, said apparatus being operable to cause reception of information from a base station by:

    receiving information including a first signalling information indicating a transport block size, TBS, the first signalling information being a set number of bits, receiving a data packet by using the transport block size indicated by said
first signaling information, and
receiving, in dependence on the result of the first data packet reception, said data packet a second time by using a second signalling information indicating a transport block size, the second signalling information being a set number of bits,

    **characterized in that** if the second signalling information includes a predefined reserved TBS index value indicating that the transport block size is an invalid TBS for the retransmission, the transport block size indicated by the first signalling information is used when receiving said data packet a second time.

10. The apparatus according to claim 9, wherein the invalid transport block size is indicated by a predefined transport block size index.

11. The apparatus according to claim 9, wherein the invalid transport block size is indicated by information comprising bits which are all ones or bits which are all zeros.

12. The apparatus according to any one of claims 9 to 11, wherein the modulation scheme is changed when receiving said data packet a second time.

13. The apparatus according to any one of claims 9 to 12, wherein the number of channelisation codes is changed when receiving said data packet a second time.

14. The apparatus according to any one of claims 9 to 13, wherein the first signalling information and the second signalling information comprise 6 bits.

15. The apparatus according to any one of claims 9 to 14, wherein the wireless communication system is a third generation wireless communication system.

16. The apparatus according to any one of claims 9 to 15, wherein the wireless communication system is implementing High Speed Downlink Packet Access.

17. A method for transport block size signaling, comprising:

    prior to receiving a data packet, receiving information in a user equipment including a first signalling information indicating a transport block size, TBS, the first signalling information being a set number of bits,
receiving said data packet using the transport block size indicated by said first signalling information, and
depending on the result of the receiving, receiving said data packet a second time using a second signalling information indicating a transport block size, the second signalling information being a set number of bits,

    **characterized in that**, if the second signalling information includes a
30 predefined reserved TBS index value indicating that the transport block size is an invalid TBS for the retransmission, the transport block size indicated by the first signalling information is used when receiving said data packet a second time.

18. The method according to claim 17, wherein the invalid transport block size is indicated by a predefined transport block size index.

19. The method according to claim 17, wherein the invalid transport block size is indicated by information comprising bits which are all ones or bits which are all zeros.

20. The method according to any one of claims 17 to 19, wherein the modulation scheme is changed when receiving said data packet a second time.

21. The method according to any one of claims 17 to 20, wherein the number of channelisation codes is changed when receiving said data packet a second time.

22. The method according to any one of claims 17 to 21, wherein the first signalling information and the second signalling information comprise 6 bits:

**Patentansprüche**

1. Eine Vorrichtung zur Verwendung in einer Basisstation zur Transportblockgrößensignalisierung in einem Drahtloskommunikationssystem, wobei die Vorrichtung betreibbar ist, um eine Sendung bzw. Übertragung von Information an eine Nutzereinrichtung zu verursachen, durch:

Senden, vor dem Senden eines Datenpakets, von Information, die erste Signalisierungsinformation beinhaltet, die eine Transportblockgröße bzw. TBS (TBS = transport block size) anzeigt, wobei die erste Signalisierungsinformation eine festgelegte bzw. eingestellte Anzahl von Bits ist,
Senden des Datenpakets durch Verwenden der Transportblockgröße, die durch die erste Signalisierungsinformation angezeigt wird, und
erneutes Senden, in Abhängigkeit von dem Ergebnis der Datenpaketsendung, des Datenpakets unter Verwendung von zweiter Signalisierungsinformation, die die Transportblockgröße anzeigt, wobei die zweite Signalisierungsinformation eine festgelegte Anzahl von Bits ist,

**dadurch gekennzeichnet, dass**, wenn es nicht möglich ist, die Transport-blockgröße bei der erneuten Sendung anzuzeigen, die zweite Signalisierungsinformation einen vordefinierte, reservierten TBS-Indexwert beinhaltet, der anzeigt, dass die Transportblockgröße eine für die erneute Sendung ungültige TBS ist, und die Transportblockgröße, die durch die erste Signalisierungsinformation angezeigt wird, bei der erneuten Sendung verwendet wird.

2. Vorrichtung nach Anspruch 1, wobei die ungültige Transportblockgröße durch einen vordefinierten Transportblockgrößenindex angezeigt wird.

3. Vorrichtung nach Anspruch 1, wobei die ungültige Transportblockgröße durch Information angezeigt wird, die Bits aufweist, die alle Einsen sind oder Bits, die alle Nullen sind.

4. Vorrichtung nach einem der vorhergehenden Ansprüche, wobei die erste Signalisierungsinformation und die zweite Signalisierungsinformation 6 Bits aufweisen.

5. Vorrichtung nach einem der vorhergehenden Ansprüche, wobei das Modulationsschema für die erneute Sendung verändert wird.

6. Vorrichtung nach einem der vorhergehenden Ansprüche, wobei die Anzahl von Kanalisierungscodes für die erneute Sendung verändert wird.

7. Vorrichtung nach einem der vorhergehenden Ansprüche, wobei das Drahtloskommunikationssystem ein Drahtloskommunikationssystem der dritten Generation ist.

8. Vorrichtung nach einem der vorhergehenden Ansprüche, wobei das Drahtloskommunikationssystem Hochgeschwindigkeitsabwärtsverbindungspaketzugriff bzw. HSDPA (HSDPA = High Speed Downlink Packet Access) implementiert.

9. Eine Vorrichtung zur Verwendung in einer Nutzereinrichtung zur Transportblockgrößensignalisierung in einem Drahtloskommunikationssystem, wobei die Vorrichtung betreibbar ist, um einen Empfang von Information an einer Basisstation zu verursachen, durch:

Empfangen von Information, die erste Signalisierungsinformation beinhaltet, die eine Transportblockgröße bzw. TBS (TBS = transport block size) anzeigt, wobei die erste Signalisierungsinformation eine festgelegte bzw. eingestellte Anzahl von Bits ist, Empfangen eines Datenpakets durch Verwenden der Transportblockgröße, die durch die erste Signalisierungsinformation angezeigt wird, und

Empfangen, in Abhängigkeit von dem Ergebnis des ersten Datenpaketempfangs, des Datenpakets ein zweites Mal durch Verwenden von zweiter Signalisierungsinformation, die eine Transportblockgröße anzeigt, wobei die zweite Signalisierungsinformation eine festgelegte Anzahl von Bits ist,

**dadurch gekennzeichnet, dass** wenn die zweite Signalisierungsinformation einen vordefinierten, reservierten TBS-Indexwert beinhaltet, der anzeigt, dass die Transportblockgröße eine für die erneute Sendung nicht gültige TBS ist, die Transportblockgröße, die durch die erste Signalisierungsinformation angezeigt wird, verwendet wird, wenn das Datenpaket ein zweites Mal empfangen wird.

10. Vorrichtung nach Anspruch 9, wobei die ungültige Transportblockgröße durch einen vordefinierten Transportblockgrößenindex angezeigt wird.

11. Vorrichtung nach Anspruch 9, wobei die ungültige Transportblockgröße durch Information angezeigt wird, die Bits aufweist, die alle Einsen sind oder Bits, die alle Nullen sind.

12. Vorrichtung nach einem der Ansprüche 9 bis 11, wobei das Modulationsschema verändert bzw. gewechselt wird, wenn das Datenpaket ein zweites Mal empfangen wird.

13. Vorrichtung nach einem der Ansprüche 9 bis 12, wobei die Anzahl von Kanalisierungscodes verändert wird, wenn das Datenpaket ein zweites Mal empfangen wird.

14. Vorrichtung nach einem der Ansprüche 9 bis 13, wobei die erste Signalisierungsinformation und die zweite Signalisierungsinformation 6 Bits aufweisen.

15. Vorrichtung nach einem der Ansprüche 9 bis 14, wobei das Drahtloskommunikationssystem ein Drahtloskommunikationssystem der dritten Generation ist.

16. Vorrichtung nach einem der Ansprüche 9 bis 15, wobei das Drahtloskommunikationssystem Hochgeschwindigkeitsabwärtsverbindungspaketzugriff bzw. HSDPA (HSDPA = High Speed Downlink Packet Access) implementiert.

17. Ein Verfahren zur Transportblockgrößensignalisierung, das Folgendes aufweist:

vor dem Empfangen eines Datenpakets, Empfangen von Information in einer Nutzereinrichtung, die erste Signalisierungsinformation enthält, die eine Transportblockgröße bzw. TBS (TBS = transport block size) anzeigt, wobei die erste Signalisierungsinformation eine festgelegte Anzahl von Bits ist,

Empfangen des Datenpakets unter Verwendung der Transportblockgröße, die durch die erste Signalisierungsinformation angezeigt wird, und

abhängig von dem Ergebnis des Empfangens, Empfangen des Datenpakets ein zweites Mal unter Verwendung von zweiter Signalisierungsinformation, die eine Transportblockgröße anzeigt, wobei die zweite Signalisierungsinformation eine festgelegte Anzahl von Bits ist,

**dadurch gekennzeichnet, dass** wenn die zweite Signalisierungsinformation einen vordefinierten, reservierten TBS-Indexwert beinhaltet, der anzeigt dass die Transportblockgröße eine für die erneute Sendung ungültige TBS ist, die Transportblockgröße, die durch die erste Signalisierungsinformation angezeigt wird, verwendet wird, wenn das Datenpaket ein zweites Mal empfangen wird.

18. Verfahren nach Anspruch 17, wobei die ungültige Transportblockgröße durch einen vordefinierten Transportblockgrößenindex angezeigt wird.

19. Verfahren nach Anspruch 17, wobei die ungültige Transportblockgröße durch Information angezeigt wird, die Bits aufweist, die alle Einsen sind oder Bits, die alle Nullen sind.

20. Verfahren nach einem der Ansprüche 17 bis 19, wobei das Modulationsschema verändert bzw. gewechselt wird, wenn das Datenpaket ein zweites Mal empfangen wird.

**21.** Verfahren nach einem der Ansprüche 17 bis 20, wobei die Anzahl von Kanalisierungscodes verändert wird, wenn das Datenpaket ein zweites Mal empfangen wird.

**22.** Verfahren nach einem der Ansprüche 17 bis 21, wobei die erste Signalisierungsinformation und die zweite Signalisierungsinformation 6 Bits aufweisen.

**Revendications**

**1.** Dispositif pour utilisation dans une station de base pour la signalisation de taille de bloc de transport dans un système de communication sans fil, le dispositif étant actionnable pour provoquer la transmission d'informations vers un équipement d'utilisateur:

en émettant, avant la transmission d'un paquet de données, des informations comprenant une première information de signalisation indiquant une taille de bloc de transport, TBS, la première information de signalisation étant un nombre défini de bits,
en transmettant le paquet de données en utilisant la taille de bloc de transport indiquée par la première information de signalisation, et
en retransmettant, en fonction du résultat de la transmission du paquet de données, ledit paquet de données en utilisant une deuxième information de signalisation indiquant une taille de bloc de transport, la deuxième information de signalisation étant un nombre défini de bits,

**caractérisé en ce que**, s'il n'est pas possible d'indiquer la taille de bloc de transport dans la retransmission, la deuxième information de signalisation comprend une valeur d'index TBS réservée prédéfinie indiquant que la taille de bloc de transport est un TBS non valide pour la retransmission, et la taille de bloc de transport indiquée par la première information de signalisation est utilisée dans la retransmission.

**2.** Dispositif selon la revendication 1, dans lequel la taille de bloc de transport non valide est indiquée par un index de taille de bloc de transport prédéfini.

**3.** Dispositif selon la revendication 1, dans lequel la taille de bloc de transport non valide est indiquée par des informations comprenant des bits qui sont tous des uns ou des bits qui sont tous des zéros.

**4.** Dispositif selon l'une quelconque des revendications précédentes, dans lequel la première information de signalisation et la deuxième information de signalisation comprennent 6 bits.

**5.** Dispositif selon l'une quelconque des revendications précédentes, dans lequel le mode de modulation est changé pour la retransmission.

**6.** Dispositif selon l'une quelconque des revendications précédentes, dans lequel le nombre de codes de canalisation est changé pour la retransmission.

**7.** Dispositif selon l'une quelconque des revendications précédentes, dans lequel le système de communication sans fil est un système de communication sans fil de troisième génération.

**8.** Dispositif selon l'une quelconque des revendications précédentes, dans lequel le système de communication sans fil met en oeuvre un Accès à Paquets de Liaison Descendante à Haute Vitesse.

**9.** Dispositif pour utilisation dans un équipement d'utilisateur pour la signalisation de taille de bloc de transport dans un système de communication sans fil, le dispositif étant actionnable pour provoquer la réception d'informations à partir d'une station de base:

en recevant des informations comprenant une première information de signalisation indiquant une taille de bloc de transport, TBS, la première information de signalisation étant un nombre défini de bits, en recevant un paquet de données en utilisant la taille de bloc de transport indiquée par la première information de signalisation, et
en recevant, en fonction du résultat de la première réception de paquet de données, ledit paquet de données une deuxième fois en utilisant une deuxième information de signalisation indiquant une taille de bloc de transport, la deuxième information de signalisation étant un nombre défini de bits,

**caractérisé en ce que** si la deuxième information de signalisation comprend une valeur d'index TBS réservée prédéfinieindiquant que la taille de bloc de transport est un TBS non valide pour la retransmission, la taille de bloc de transport indiquée par la première information de signalisation est utilisée lors de la réception du paquet de données une deuxième fois.

10. Dispositif selon la revendication 9, dans lequel la taille de bloc de transport non valide est indiquée par un index de taille de bloc de transport prédéfini.

11. Dispositif selon la revendication 9, dans lequel la taille de bloc de transport non valide est indiquée par des informations comprenant des bits qui sont tous des uns ou des bits qui sont tous des zéros.

12. Dispositif selon l'une quelconque des revendications 9 à 11, dans lequel le mode de modulation est changé lors de la réception du paquet de données une deuxième fois.

13. Dispositif selon l'une quelconque des revendications 9 à 12, dans lequel le nombre de codes de canalisationest changé lors de la réception du paquet de données une deuxième fois.

14. Dispositif selon l'une quelconque des revendications 9 à 13, dans lequel la première information de signalisation et la deuxième information de signalisation comprennent 6 bits.

15. Dispositif selon l'une quelconque des revendications 9 à 14, dans lequel le système de communication sans fil est un système de communication sans fil de troisième génération.

16. Dispositif selon l'une quelconque des revendications 9 à 15, dans lequel le système de communication sans fil met en oeuvre un Accès à Paquets de Liaison Descendante à Haute Vitesse.

17. Procédé pour la signalisation de taille de bloc de transport, comprenant:

avant la réception d'un paquet de données, recevoir des informations dans un équipement d'utilisateur comprenant une première information de signalisation indiquant une taille de bloc de transport, TBS, la première information de signalisation étant un nombre défini de bits,
recevoir ledit paquet de données en utilisant la taille de bloc de transport indiquée par la première information de signalisation, et
en fonction du résultat de la réception, recevoir ledit paquet de données une deuxième fois en utilisant une deuxième information de signalisation indiquant une taille de bloc de transport, la deuxième information de signalisation étant un nombre défini de bits,

**caractérisé en ce que**, si la deuxième information de signalisation comprend une valeur d'index TBS réservée prédéfinie indiquant que la taille de bloc de transport est un TBS non valide pour la retransmission, la taille de bloc de transport indiquée par la première information de signalisation est utilisée lors de la réception du paquet de données une deuxième fois.

18. Procédé selon la revendication 17, dans lequel la taille de bloc de transport non valide est indiquée par un index de taille de bloc de transport prédéfini.

19. Procédé selon la revendication 17, dans lequel la taille de bloc de transport non valide est indiquée par des informations comprenant des bits qui sont tous des uns ou des bits qui sont tous des zéros.

20. Procédé selon l'une quelconque des revendications 17 à 19, dans lequel le mode de modulation est changé lors de la réception du paquet de données une deuxième fois.

21. Procédé selon l'une quelconque des revendications 17 à 20, dans lequel le nombre de codes de canalisationest changé lors de la réception du paquet de données une deuxième fois.

22. Procédé selon l'une quelconque des revendications 17 à 21, dans lequel la première information de signalisation et la deuxième information de signalisation comprennent 6 bits.

| 7bits | 1bit | 6bits | 3bits | 3bits | 1bit | 16 bits |
|-------|------|-------|-------|-------|------|---------|
| CCS | MS | TBS | HAP | RV | ND | UE-ID+CRC |

|←——Part 1——→|←———————————————— Part 2 ————————————————→|

CCS = channellisation code set
MS  = modulation scheme
TBS = transport block size
HAP = hybrid ARQ process id
RV  = redundancy and constellation version
ND = new data indicator
UE-ID+CRC = user equipment identify + cyclic redundancy check

## Fig.1

| 7bits | 1bit | 6bits | 3bits | 3bits | 1bit | 16 bits |
|-------|------|-------|-------|-------|------|---------|
| CCS | MS | TBS=111111 | HAP | RV | ND | UE-ID+CRC |

|←——Part 1——→|←———————————————— Part 2 ————————————————→|

CCS = channellisation code set
MS  = modulation scheme
TBS = transport block size
HAP = hybrid ARQ process id
RV  = redundancy and constellation version
ND = new data indicator
UE-ID+CRC = user equipment identify + cyclic redundancy check

## Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 25.321,* September 2002

- *3GPP TD 25.321,* September 2002